# FASCICULE DE BREVET EUROPEEN

(11) **EP 0 527 680 B1**
(45) Date de publication et mention de la délivrance du brevet: **05.04.1995**
(21) Numéro de dépôt: 92402260.1
(22) Date de dépôt: 07.08.1992
(51) Int. Cl.: C03C 17/36, H05B 3/26, H05B 3/84

(54) **Raccordement de vitrages à couche électroconductrice**
Anschluss von Verglasungen mit einer elektrisch leitfähigen Schicht
Connection of glazing with an electroconductive layer

(30) Priorité: 10.08.1991 DE 4126533
(43) Date de publication de la demande: 17.02.1993
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Sauer, Gerd, W-5190 Stolberg-Venwegen (DE)
(74) Mandataire: Eudes, Marcel

(56) Documents cités:
- EP-A- 0 217 703
- EP-A- 0 226 901
- EP-A- 0 378 917
- DE-U- 9 013 380
- US-A- 4 106 930

## Description

L'invention a pour objet un procédé de raccordement d'une couche mince électroconductrice transparente déposée sur une feuille de verte silicate, en particulier d'une couche mince servant de résistance chauffante sur un vitrage à chauffage électrique.

On utilise en particulier des feuilles de verte à revêtement transparent électroconducteur en tant que vitrages chauffants mais aussi à des fins diverses, vitragesantennes le cas échéant chauffants, fenêtres à rôle d'écran électromagnétique...

Or la pose des connexions recevant les câbles de liaison constitue un point délicat. Dans la plupart des cas, il est tout d'abord nécessaire de prévoir un collecteur de répartition du courant le long de bords opposés de la zone conductrice ; mais c'est sur les vitrages chauffants qu'on rencontre les exigences les plus sévères. Les pare-brise chauffants de véhicules automobiles, par exemple, doivent posséder une transparence élevée, supérieure à 70 % dans le spectre visible, et ne présenter en même temps qu'une faible résistivité superficielle, de quelques ohms par carré seulement. Leurs couches conductrices extrêmement minces en raison de la transparence exigée et par conséquent vulnérables sont alors sollicitées presque à leur limite de charge par une densité de courant relativement élevée ; leur raccordement doit procurer dans la zone de transition un contact électrique régulier et de bonne qualité, pour y éviter toute pointe locale de courant.

Le raccordement est particulièrement problématique quand la couche mince ellemême est constituée d'un film d'un métal tel que l'argent pris entre des strates semi-conductrices ou non conductrices de composés métalliques la protégeant des influences extérieures et atténuant la réflectivité. Déposées par des procédés divers, de telles couches à strates protectrices d'oxydes métalliques, dont l'épaisseur totale est au plus de l'ordre du micron, sont aujourd'hui d'usage courant.

Le document EP-A-226 901 décrit un procédé de raccordement électrique d'une couche conductrice déposée sur un vitrage et recouverte d'une couche diélectrique. Ce procédé a l'inconvénient de nécessiter de travailler à des températures très élevées lors de sa mise en oeuvre si l'on veut que celle-ci soit rapide et donc industriellement intéressante.

De multiples solutions ont donc été proposées pour raccorder ces couches minces transparentes. Elles consistent essentiellement à renforcer la zone marginale intéressée par une bande conductrice nettement plus épaisse constituée par exemple d'un émail électroconducteur à base d'argent et/ou d'un revêtement obtenu par métallisation, susceptible d'être déposée avant ou après la couche transparente, en particulier pour constituer le collecteur ; la bande renforcée recevra ensuite, de préférence hors de la couche, une connexion soudée à l'aide d'une brasure à base d'étain ou pourra même être doublée par un conducteur de répartition du courant, fil ou tresse soudés de point en point ou mince clinquant métallique collé ou seulement pressé sur la feuille porteuse.

Chacune de ces solutions possède ses propres avantages et inconvénients en efficacité, adhérence, aspect optique, coût, durabilité.

L' invention a pour objet de procurer un procédé créant entre une couche électroconductrice transparente mince recouverte d'une sur-couche non conductrice ou semi-conductrice, et un collecteur de raccordement une liaison sure et durable satisfaisant à de plus hautes exigences quant au passage régulier du courant même sous des densités de courant et/ou des tensions relativement élevées.

L'invention a également pour objet un procédé dont la mise en oeuvre peut être rapide sans nécessiter de températures élevées.

Or, il est également connu par de nombreuses publications telles que le document US 4 106 930 que l'association de vibrations ultrasonores avec les procédés de brasage classiques procure des soudures très efficaces sur des supports variés, vertes et céramiques ou métaux et semi-conducteurs ; une telle solution est donc employée pour le raccordement de divers éléments électroniques. Dans le cas d'un réseau chauffant formé de fils parallèles imprimés à la surface d'un vitrage à partir d'un émail conducteur à l'argent, il a aussi été proposé par le brevet DE-A-1 807 862 d'élaborer directement les collecteurs par cette méthode en les posant à cheval sur les extrémités des fils.

Selon l'invention, il est possible, à l'aide d'une soudeuse à panne chauffante soumise à une vibration ultrasonore, de déposer directement une pellicule d'une brasure choisie parmi des compositions à base de plomb, d'étain, de zinc et d'antimoine sur des couches minces électroconductrices transparentes recouvertes de sur-couches non conductrices ou semi-conductrices , la liant à ces dernières avec une bonne efficacité et une bonne adhérence même lorsque le film métallique proprement dit est recouvert d'une strate non-conductrice à base d'oxydes métalliques par exemples. Ces strates non conductrices, de nature à empêcher une liaison électrique efficace du film métallique sous-jacent avec une électrode déposée sur elles, semblent disloquées par l'énergie des ultrasons, ce qui établit une liaison métallique directe entre la pellicule à l'étain et le film conducteur mince sans réduire celui-celui-ci même dans la zone critique de la bordure interne. Il s'est révélé que le procédé peut aussi s'employer avec succès même quand la couche mince électroconductrice est constituée non d'un métal mais d'un oxyde métallique comme un oxyde d'étain ou d'étain et d'antimoine.

Une pellicule de brasure tendre ainsi déposée peut servir directement d'amenée de courant à la couche mince, sous la forme par exemple d'une bande formant un collecteur qu'on soude localement à un câble d'amenée de courant. S'il faut faire passer dans la couche mince des courants plus élevés, il est recommandé d'utiliser ladite pellicule en tant que liaison avec un conducteur en forme de ruban métallique, par exemple un clinquant ou une tresse de cuivre, lui-même soudé par son intermédiaire. Le soudage dudit conducteur peut s'effectuer sur toute sa longueur ; dans de nombreux cas, il suffit cependant de l'effectuer par points espacés de quelques centimètres.

Selon le procédé de l'invention on obtient un bon raccordement des résistances chauffantes à couche mince en imprimant et en cuisant des bandes d'un èmail électroconducteur, en l'occurrence d'une pâte renfermant de l'argent métal et un fritte de verre à bas point de fusion sur la feuille de verre ou sur une sous-couche d'émail opaque appliquée à sa surface, en déposant sur ces bandes conductrices et sur le reste de la surface du verre la couche mince simple ou multiple, puis sur cette dernière, au droit des bandes conductrices, une pellicule étamée sur laquelle on soude enfin un ruban de cuivre auquel sera raccordé le câble d'amenée de courant.

En tant que brasure conviennent des compositions connues à base de plomb, d'étain, de zinc et d'antimoine. Des soudeuses thermiques à ultrasons utilisables aux fins visées par l'invention sont connues et disponibles dans le commerce.

Il peut être utile de préchauffer la feuille de verre, par exemple à une température allant de 50 à 100 °C et le cas échéant au delà, jusqu'à une température maximale de l'ordre de 200 °C, avant de faire l'apport de la brasure à l'étain à l'aide de la soudeuse à ultrasons.

Le procédé de l'invention ne s'applique bien entendu pas seulement à la fabrication de vitrages chauffants pourvus d'électrodes de contact en forme de bandes mais aussi, avec les mêmes avantages, pour raccorder des couches conductrices à des électrodes ponctuelles telles que celles utilisées par exemple sur les vitrages-antennes. Il s'emploie avec le même succès au raccordement de couches minces semi-conductrices simples ou multiples servant de cellules solaires, par exemple dans les toits d'automobiles en verre.

L'invention sera décrite de plus près en liaison avec les dessins, qui montrent :
- figure 1 : une feuille de verre monolithique porteuse d'une électrode de raccordement conforme à l'invention,
- figure 2 : un vitrage chauffant multiple porteur d'une électrode de raccordement selon l'invention.

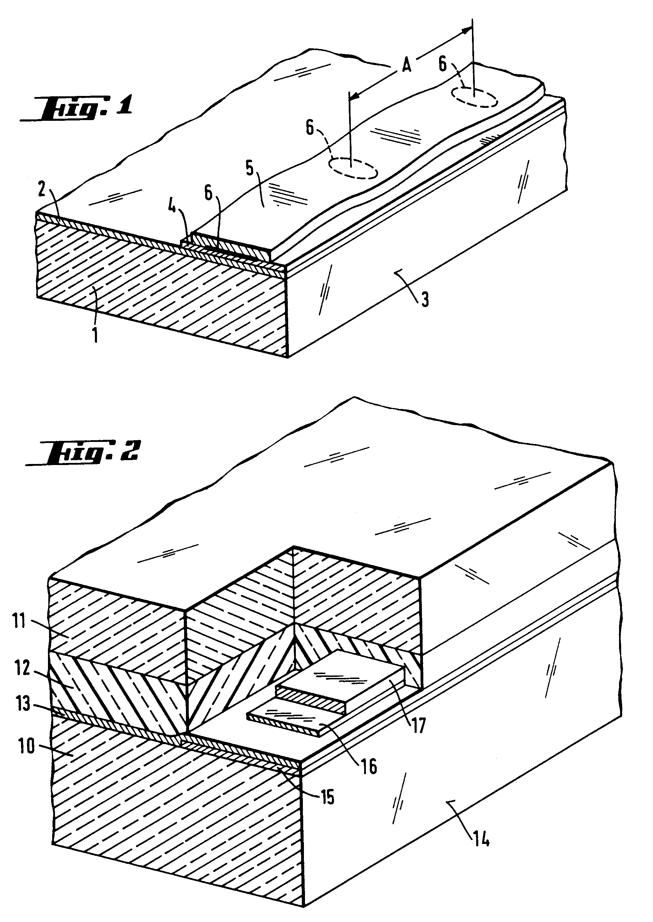

La feuille de verre 1 représentée sur la figure 1 est pourvue sur l'une de ses faces d'une couche mince transparente 2 à base d'oxyde d'étain et d'indium. Cette couche 2 a été déposée par voie pyrolytique en pulvérisant à la surface une solution d'un composé approprié d'étain et d'indium qui s'est transformé en oxydes sous l'effet de la chaleur ; de telles couches d'oxydes peuvent être laissés à l'air libre sans protection spéciale.

Le long de l'arête 3 du vitrage 1, on recouvre la couche mince oxydique 2 d'une pellicule 4 de brasure à l'étain ; de même le long de l'arête opposée. La pellicule de brasure 4 est déposée à l'aide d'une soudeuse à ultrasons de sorte que la brasure liquide s'étale sur et même au coeur de la couche mince 2 par la panne chauffante en vibration ultrasonique. Un ruban de cuivre 5 est appliqué sur cette pellicule d'étain et soudé sur elle par points en des plots 6 à des espacements A de l'ordre de 10 cm. Ce ruban, qui peut être constitué d'un clinquant ou d'une tresse, se raccorde directement au câble de connexion.

La couche mince 2 peut aussi être une couche multiple, formée de trois, quatre, cinq strates dont une strate médiane est constituée d'argent et la dernière d'un composé métallique non-conducteur tel qu'un oxyde ou un nitrure. Le dépôt sous ultrasons de la pellicule d'étain 4 disloque cette strate supérieure isolante de la couche conductrice multiple le long de microfissures à travers lesquelles une liaison électrique conductrice efficace s'établit entre la pellicule d'étain 4 et le film d'argent.

Le vitrage multiple représenté sur la figure 2 comprend deux feuilles de verre 10 et 11 liées par un intercalaire thermoplastique 12. La couche conductrice transparente 13 est une couche multiple superposant par exemple SnO₂-NiCr-Ag-NiCr-SnO₂, appliquée par pulvérisation cathodique sous champ électromagnétique à la surface de la feuille de verre 10 sur laquelle, le long de son arête latérale 14, une mince bande 15 d'une pâte conductrice à l'argent avait d'abord été classiquement déposée par sérigraphie puis cuite à température élevée. Une pellicule 16 de brasure tendre a ensuite été déposée à l'aide d'une panne de soudage couplée à un générateur d'ultrasons, au droit de la bande conductrice 15, sur la couche multiple 13 à laquelle elle s'est liée solidement sous l'effet de l'énergie ultrasonore. Un ruban de cuivre 17 est posé sur la pellicule brasée à toute la surface de laquelle il est solidement lié en contact électrique direct avec elle. Le câble de connexion lui sera relié.

## Revendications

1. Procédé de raccordement électrique d'une couche mince électroconductrice transparente déposée sur une feuille de verte silicate, en particulier servant de résistance chauffante sur un vitrage à chauffage électrique, recouverte d'une surcouche non conductrice ou semi-conductrice, **caractérisé en ce qu'** à l'aide d'une soudeuse à panne chauffante soumise à une vibration ultrasonique, on dépose sur la couche électroconductrice et lie à celle-ci une pellicule d'une brasure choisie parmi des compositions à base de plomb, d'étain, de zinc et d'antimoine.

2. Procédé selon la revendication 1, **caractérisé en ce que** la couche mince est soudée par l'intermédiaire de ladite pellicule de brasure tendre à une électrode métallique d'amenée de courant.

3. Procédé selon la revendication 2, **caractérisé en ce que** c'est par points que l'électrode métallique d'amenée de courant est soudée à la couche mince.

4. Procédé selon la revendication 2, **caractérisé en ce que** c'est sur toute sa surface que l'électrode métallique d'amenée de courant est soudée à la couche mince.

5. Procédé selon l'une des revendications 2 à 4, **caractérisé en ce que** des bandes collectrices sont d'abord imprimées puis cuites à la surface du verte à partir d'une pâte adéquate, la couche mince électroconductrice déposée sur ces bandes et la surface contiguë du verte, la pellicule de brasure tendre déposée sur cette couche mince au droit des bandes collectrices, puis une électrode de raccordement en forme de ruban soudée à cette pellicule.

6. Procédé selon l'une des revendications 1 à 5, **caractérisé en ce que** l'on emploie pour brasure un alliage d'étain et de plomb au zinc et à l'antimoine.

7. Procédé selon l'une des revendications 1 à 6, **caractérisé en ce que** la feuille de verte porteuse de la couche mince est portée à une température de 50 à 200°C avant dépôt de la pellicule de brasure.

8. Procédé selon l'une des revendications 1 à 7, **caractérisé en ce que** la couche mince est constituée d'un film d'un métal tel que l'argent pris entre des strates semi-conductrices ou non-conductrices de composés métalliques.

## Claims

1. Method of electrically connecting a thin transparent electrically conducting film, deposited on a sheet of silicate glass, in particular serving as a heating resistor on an electrically heating pane, covered with a non-conducting or semiconducting overlying film, characterized in that, by means of a soldering machine with heating blade subjected to ultrasonic vibration, there is deposited on the electrically conducting film and bonded to it a skin of a solder chosen from among the compositions based upon lead, tin, zinc and antimony.

2. Method according to Claim 1, characterized in that the thin film is soldered by means of said soft solder skin to a metallic electrode for electrical supply.

3. Method according to Claim 2, characterized in that the electrical supply metallic electrode is spot soldered to the thin film.

4. Method according to Claim 2, characterized in that the electrical supply metallic electrode is soldered over its entire area to the thin film.

5. Method according to one of Claims 2 to 4, characterized in that collector strips are first printed, then baked onto the surface of the glass from a suitable paste, the thin electrically conducting film is deposited on these strips and the contiguous surface of the glass, the soft solder skin is deposited on this thin film at the position of the collector strips, and then a strip-shaped connecting electrode is soldered to this skin.

6. Method according to one of Claims 1 to 5, characterized in that a zinc and antimony tin and lead alloy is used for soldering.

7. Method according to one of Claims 1 to 6, characterized in that the glass sheet carrying the thin film is raised to a temperature of 50 to 200°C before deposition of the solder skin.

8. Method according to one of Claims 1 to 7, characterized in that the thin film is constituted of a film of a metal such as silver sandwiched between semiconducting or non-conducting strata of metallic compounds.

## Patentansprüche

1. Verfahren zum Herstellen einer elektrischen Verbindung mit einer auf einer Silikatglasscheibe angeordneten lichtdurchlässigen elektrisch leitenden Dünnschicht, die insbesondere als Heizwiderstand einer elektrisch beheizbaren Glasscheibe dient und die mit einer nichtleitenden oder halbleitenden Deckschicht versehen ist, **dadurch gekennzeichnet**, daß mit Hilfe eines Lötgeräts mit einem in Ultraschallschwingungen versetzten beheizten Lötkolben eine Schicht aus einem aus den Legierungen auf der Basis von Blei, Zinn, Zink und Antimon ausgewählten Lot auf die elektrisch leitende Schicht aufgetragen und mit dieser verbunden wird.

2. Verfahren nach Anspruch 1, dadurch gekennzeichnet, daß die Dünnschicht über die Schicht aus niedrigschmelzendem Lot mit einer metallischen Stromzufüfhrungselektrode verlötet wird.

3. Verfahren nach Anspruch 2, dadurch gekennzeichnet, daß die metallische Stromzuführungselektrode punktweise mit der Dünnschicht verlötet wird.

4. Verfahren nach Anspruch 2, dadurch gekennzeichnet, daß die metallische Stromzuführungselektrode auf ihrer gesamten Fläche mit der Dünnschicht verlötet wird.

5. Verfahren nach einem der Ansprüche 2 bis 4, dadurch gekennzeichnet, daß zunächst Leitstreifen aus einer geeigneten Paste aufgedruckt und auf der Glasoberfläche eingebrannt werden, auf diese Leitstreifen und die sich anschließende Glasoberfläche die elektrisch leitende Dünnschicht aufgebracht, auf diese Dünnschicht an der Stelle der Leitstreifen die Schicht aus niedrigschmelzendem Lot aufgetragen und dann eine bandförmige Stromzuführungselektrode mit dieser Schicht verlötet wird.

6. Verfahren nach einem der Ansprüche 1 bis 5, dadurch gekennzeichnet, daß als Lot eine Zink und Antimon enthaltende Zinn- und Blei-Legierung verwendet wird.

7. Verfahren nach einem der Ansprüche 1 bis 6, dadurch gekennzeichnet, daß die die Dünnschicht tragende Glasscheibe vor dem Auftragen der Lotschicht auf eine Temperatur von 50 bis 200 °C erwärmt wird.

8. Verfahren nach einem der Ansprüche 1 bis 7, dadurch gekennzeichnet, daß die Dünnschicht aus einer Schicht eines Metalls wie Silber besteht, die zwischen halbleitenden oder nichtleitenden Metallverbindungsschichten eingebettet ist.
